Europäisches Patentamt

European Patent Office

Office européen des brevets

(11) Veröffentlichungsnummer: **0 306 836**
**A2**

(12) **EUROPÄISCHE PATENTANMELDUNG**

(21) Anmeldenummer: 88114278.0

(22) Anmeldetag: 01.09.88

(51) Int. Cl.4: **E06B 5/12**

(30) Priorität: 05.09.87 DE 3729870

(43) Veröffentlichungstag der Anmeldung:
15.03.89 Patentblatt 89/11

(84) Benannte Vertragsstaaten:
AT BE CH DE ES FR GB GR IT LI LU NL SE

(71) Anmelder: FLACHGLAS
AKTIENGESELLSCHAFT
Otto-Seeling-Promenade 10-14
D-8510 Fürth(DE)

(72) Erfinder: Hanck, Giso, Dipl.-Ing.
Stadtgartenring 68
D-4630 Bochum 6(DE)

(74) Vertreter: Honke, Manfred, Dr. et al
Patentanwälte Andrejewski, Honke & Partner
Theaterplatz 3 Postfach 10 02 54
D-4300 Essen 1(DE)

(54) Gegen Sprengwirkung gesichertes Fenster für Bauwerke.

(57) Gegen Sprengwirkung gesichertes Fenster für Bauwerke, - mit Fensterrahmen und in die Fensterrahmenöffnung eingepaßter Glasscheibeneinheit. Die Glasscheibeneinheit weist umlaufend einen überstehenden, verformbaren Befestigungsstreifen auf, und dieser ist an dem Fensterrahmen befestigt. Die mittels Glashalteleisten am Fensterrahmen befestigte Glasscheibeneinheit weist eine die gesamte Fensterrahmenöffnung überspannende Sprengschutzmembran aus Kunststoff auf, die mit einem über die Glasscheibeneinheit vorstehenden Überstand den Befestigungsstreifen bildet. Der Befestigungsstreifen weist in seinem Randbereich eine Einspannwulst auf und ist unter Abwinklung zwischen einer Glashalteleiste und dem Fensterrahmen geführt und mit dem Einspannwulst an der Glashalteleiste und/oder an dem Fensterrahmen formschlüssig blockiert.

F i g.1

## Gegen Sprengwirkung gesichertes Fenster für Bauwerke

Die Erfindung bezieht sich gattungsgemäß auf ein gegen Sprengwirkung gesichertes Fenster für Bauwerke, - mit Fensterrahmen und in die Fensterrahmenöffnung eingepaßter Glasscheibeneinheit, wobei die Glasscheibeneinheit umlaufend einen überstehenden, verformbaren Befestigungsstreifen aufweist und dieser an dem Fensterrahmen befestigt ist. Glasscheibeneinheit bezeichnet im Rahmen der Erfindung Einheiten aus einer einfachen Glasscheibe sowie aus einer Verbundglasscheibe, aber auch Mehrscheibenisolierglaseinheiten beliebigen Aufbaus. Sprengwirkung meint die Wirkung von Explosionen und Detonationen, bei denen Druckwellen mit hoher Druckspitze das Fenster beaufschlagen. Sprengwirkung meint aber auch die Druckwellen, die auftreten, wenn ein Flugkörper die Schallmauer durchbricht. Im Sinne der Erfindung ist ein Fenster gegen Sprengwirkung gesichert, wenn es verhindert, daß die Druckwelle in dem Raum eindringt, dem das Fenster abschließend angehört. Dabei wird in Kauf genommen, daß die Glasscheibeneinheit unter Umständen zerstört wird.

Bei dem bekannten gattungsgemäßen Fenster (US-PS 27 21 157 aus 1955) ist die Glasscheibeneinheit eine mehrteilige, aus dreieckigen Zuschnitten rechteckig zusammengesetzte Verbundglasscheibe mit einer Zwischenlage aus Kunststoff, insbesondere Polyvinylacetal. Zwischen den dreieckförmigen Zuschnitten befindet sich ein Spalt, der von einem nachgiebigen Werkstoff abgedeckt ist. Die Zwischenlage aus Kunststoff bildet nicht den überstehenden, flexiblen Befestigungsstreifen. Dieser ist vielmehr ein Blechstreifen, der einerseits zwischen den Glasscheiben der Verbundglasscheibe gehalten und andererseits, ohne Abwinklung, auf den Fensterrahmen mit Schrauben befestigt ist. Bei der bekannten Ausführungsform erwartet man eine Sicherung gegen Sprengwirkung, weil die Glasscheibeneinheit in der beschriebenen Weise aus dreieckigen Zuschnitten mit elastisch überdecktem Spalt unter dem Einfluß einer Druckwelle verformungsfähig zusammengesetzt ist und weil die Zwischenlage aus Kunststoff ein Zersplittern der Verbundglasscheibenzuschnitte verhindert. Der Befestigungsstreifen soll entsprechend verformungsfähig sein. Die erreichte Sicherheitswirkung ist jedoch nicht befriedigend. Bei hohen Druckwellen kann der Blechstreifen aus dem Zwischenraum zwischen den Glasscheiben herausgerissen werden oder an den Schrauben abreißen, mit denen er am Fensterrahmen befestigt ist. Auch kann bei hohen Druckwellen die Abdeckung aus dem nachgiebigen Werkstoff zerstört werden. Die Aufteilung in dreieckförmige Zuschnitte stört die Optik. Wenn Sicherheit gegen Sprengwirkung verlangt wird, arbeitet die moderne Praxis daher anders, nämlich mit Glasscheiben extrem großer Dicke, wobei die Sicherung gegen Sprengwirkung durch die große Masse der Glasscheiben erreicht wird. Bei Windschutzscheiben von sehr schnell fliegenden Flugzeugen, die als Verbundscheiben aus extrem dikken Glasscheiben ausgeführt sind (DE-OS 23 12 491 aus 1973) ist es bekannt, eine Verbundfolie mit einem besonders bewehrten Teilstück über den Rand der Glasscheiben hinauszuführen und am Fensterrahmen einzuspannen. Das hat zur Weiterentwicklung von gegen Sprengwirkung gesicherten Fenstern für Bauwerke nichts beigetragen.

Der Erfindung liegt die Aufgabe zugrunde, bei einem gattungsgemäßen Fenster die Sicherheit gegen Sprengwirkung zu verbessern, das Fenster nämlich so weiterauszubilden, daß selbst extreme Druckwellen aufgefangen werden, und zwar selbst dann, wenn mit dünnen Glas scheiben gearbeitet wird, wie sie bei der Verglasung von Fenstern für Bauwerke üblich sind.

Zur Lösung dieser Aufgabe lehrt die Erfindung, daß die mittels Glashalteleisten am Fensterrahmen befestigte Glasscheibeneinheit eine die gesamte Fenserrahmenöffnung überspannende Sprengschutzmembran aus Kunststoff aufweist, die mit einem über die Glasscheibeneinheit vorstehenden Überstand den Befestigungsstreifen bildet, daß der Befestigungsstreifen in seinem Randbereich eine Einspannwulst aufweist, unter Abwinklung zwischen einer Glashalteleiste und dem Fensterrahmen geführt und mit dem Einspannwulst an der Glashalteleiste und/oder an dem Fensterrahmen formschlüssig blockiert ist. Die Einspannung von Membranen mit ähnlichen Einrichtungen ist für andere Zwecke an sich bekannt, und zwar auch bei Fenstern (DE-OS 19 21 174). - Sprengschutzmembran bezeichnet die Tatsache, daß diese Membran eine sehr hohe Zerreißfestigkeit aufweist. Je nach den zu erwartenden Beanspruchungen wird die Sprengschutzmembran eingerichtet. Die Sprengschutzmembran kann z. B. als verstreckte, durchsichtige Kunststoffolie ausgeführt sein. Die Sprengschutzmembran, insbesondere die Kunststofffolie, kann einschichtig oder mehrschichtig ausgeführt sein. Die Sprengschutzmembran kann aber auch als ein maschendurchsichtiges Gewebe aus verstreckten Kunststoffäden, z. B. aus aromatischem Polyamid (Keflar), ausgeführt sein. Auch die Anordnung der Sprengschutzmembran in bezug auf die Glasscheibeneinheit ist im Rahmen der Erfindung weitgehend beliebig. Im einfachsten Falle kann die Sprengschutzmembran auf der der Sprengwirkung abgewandten Seite auf der Oberfläche der Glasscheibeneinheit angeordnet sein. Dabei kann die Glasscheibeneinheit eine Einfachscheibeneinheit, eine Mehrscheibeneinheit in Form einer Verbundglasscheibe oder auch eine Mehrscheibenisolierglaseinheit sein. In der Ausführungsform, bei der die Glasscheibeneinheit eine Verbundglasscheibe aufweist, ist eine bevorzugte Ausführungsform der Erfindung dadurch gekennzeichnet, daß die Sprengschutzmembran zwischen zwei Glasscheiben der Verbundglasscheibe angeordnet ist. Stets empfiehlt es sich, die Anordnung so zu treffen, daß die Sprengschutzmembran dicht, zwischenraumfrei, an der zugeordneten Glasscheibe bzw. an den zugeordneten Glasscheiben anliegt. Sie kann im übrigen ein selbständiges Bauteil oder adhäsiv mit der zugeordneten Glasscheibe bzw. den zugeordneten Glasscheiben verbunden sein.

Der Einspannwulst an dem Befestigungsstreifen kann bei einem erfindungsgemäßen Fenster an die Sprengschutzmembran angeformt sein. Wenn als Sprengschutzmembran eine Kunststoffolie hoher Zerreißfestigkeit oder ein entsprechendes Gewebe verwendet wird, kann man die Einspannwulst auf einfache Weise dadurch bilden, daß der Befestigungsstreifen mit einem Umschlag versehen wird, in dessen Faltkante eine Rundschnur angeordnet ist, die z. B. aus Gummi oder aus Kunststoff besteht. Es empfiehlt sich, die Einspannwulst auf der der Sprengwirkung abgewandten Seite hinter der der Sprengwirkung abgewandten Glashalteleiste blockierend festzuhalten. Es besteht aber auch die Möglichkeit, die Einspannwulst in einer Nut der der Sprengwirkung abgewandten Glashalteleiste und/oder des Fensterrahmens blockierend festzuhalten. Um sicherzustellen, daß die Sprengschutzmembran an ihren Kontaktstellen mit der überfassenden Glashalteleiste unter dem Einfluß einer hohen Druckwelle nicht abreißt, empfiehlt die Erfindung, daß die Glashalteleiste an ihren Berührungsstellen mit der Sprengschutzmembran verrundete Kanten und ggf. elastische Auflagen aufweist.

Ein erfindungsgemäßes Fenster unterscheidet sich zunächst in der Optik nicht von einem Fenster, wie es bei Bauwerken üblich ist. Nichts destoweniger wird eine ausgeprägte Sicherung gegen Sprengwirkung erreicht, die auch der Beaufschlagung durch Druckwellen mit hohen Druckspitzen standhält. Dabei wirkt zunächst die Sprengschutzmembran, die entsprechend ausgelegt ist und die Beaufschlagung durch die Druckwelle verformend aufnimmt. Die Sprengschutzmembran läßt sich stets so auslegen, daß sie bei den zu erwartenden Beaufschlagungen zunächst in sich nicht zerreißt. Sie reißt aber auch an der Befestigungsseite nicht aus, weil dort der Einspannwulst sich über die gesamte Länge des freien Randes der Sprengschutzmembran erstreckt und die auftretenden Beanspruchungen über die gesamte Glashalteleiste bzw. die Nut, in die die Einspannwulst eingelegt ist, verteilt wird. Ein Ausreißen an Stellen singulärer Beanspruchung kann daher nicht auftreten. Im übrigen trägt auch die Einspannung der Glasscheibeneinheit an den Glashalteleisten zur Sicherung gegen Sprengwirkung bei. Dabei kann jedoch mit verhältnismäßig dünnen Glasscheiben gearbeitet werden, wie sie bei der Verglasung von Fenstern im Hochbau üblich sind. Die Glasscheibeneinheit eines erfindungsgemäßen Fensters ist vorzugsweise mit einer Glasscheibe oder mit mehreren Glasscheiben einer Dicke von maximal 6 mm ausgerüstet, jedoch kann auch mit Glasscheiben einer Dikke von nur 4 mm ohne weiteres gearbeitet werden.

Im folgenden wird die Erfindung anhand einer lediglich ein Ausführungsbeispiel darstellenden Zeichnung ausführlicher erläutert.

Fig. 1 bis 3 sowie 5 zeigen im Querschnitt Ausschnitte aus einem erfindungsgemäßen Fenster,

Fig. 4 zeigt einen Ausschnitt aus einer Glasscheibeneinheit eines erfindungsgemäßen Fensters.

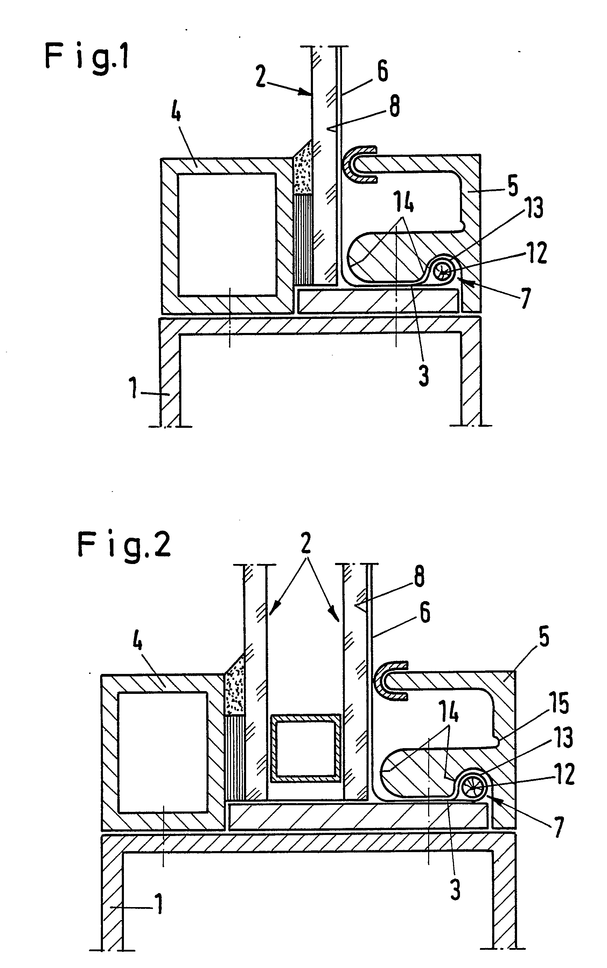

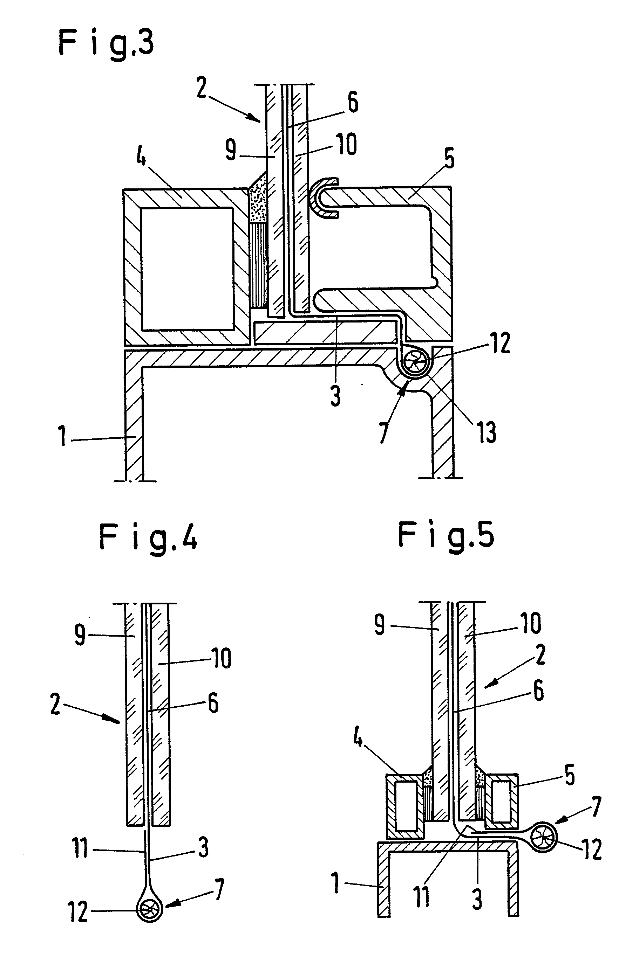

Das in den Fig. 1 bis 3 sowie 5 dargestellte Fenster ist für Bauwerke, z. B. Büro- oder Wohnungshochbauten, bestimmt. Es ist gegen Sprengwirkung gesichert. Zum grundsätzlichen Aufbau gehören ein Fensterrahmen 1 und eine in die Fensterrahmenöffnung eingepaßte Glasscheibeneinheit 2. Eine solche ist ausschnittsweise in der Fig. 4 dargestellt. Die Glasscheibeneinheit 2 besitzt umlaufend einen über ihren Grundriß überstehenden flexiblen Befestigungsstreifen 3. Dieser ist an dem Fensterrahmen 1 befestigt. Bei dem Befestigungsstreifen 3 handelt es sich jedoch nicht um ein besonderes Bauteil. Die mittels Glashalteleisten 4, 5 am Fensterrahmen 1 befestigte Glasscheibeneinheit 2 besitzt vielmehr eine die gesamte Fensterrahmenöffnung überspannende Sprengschutzmembran 6 aus Kunststoff, die über die Glasscheibeneinheit 2 vorstehend den Befestigungsstreifen 3 bildet. Der Befestigungsstreifen 3 weist in seinem Randbereich eine Einspannwulst 7 auf. Diese ist unter Abwinklung zwischen einer Glashalteleiste 5 und dem Fensterrahmen 1 geführt. Sie ist mit dem Einspannwulst 7 an der Glashalteleiste 5 und/oder an dem Fensterrahmen 1 formschlüssig blockiert. Die Sprengschutzmembran 6 mag als verstreckte, durchsichtige Kunststoffolie oder als maschendurchsichtiges Gewebe aus verstreckten Kunststoffäden, z. B. aus aromatischem Polyamid, ausgeführt sein.

Bei der Ausführungsform nach Fig. 1 und nach Fig. 2 ist die Sprengschutzmembran 6 auf der der Sprengwirkung abgewandten Seite auf der Oberfläche 8 der Glasscheibeneinheit 2 angeordnet. Sie kann aufgeklebt sein. In der Fig. 1 ist die Glasscheibeneinheit 2 eine Einfachscheibeneinheit. In der Fig. 2 handelt es sich um eine Mehrscheibenisolierglaseinheit.

Bei der Ausführungsform nach Fig. 3 ist die Glasscheibeneinheit 2 eine Verbundglasscheibe. Die Sprengschutzmembran 6 ist zwischen zwei Glasscheiben 9, 10 der Verbundglasscheibe 2 angeordnet. Insoweit wird auf die Fig. 4 verwiesen. Man erkennt, daß bei dieser Ausführungsform der Befestigungsstreifen 3 einen Umschlag 11 aufweist, in dessen Faltkante eine Rundschnur 12 angeordnet ist, die die Einspannwulst 7 formt. Die Ausführungsform nach Fig. 5 ist besonders einfach. Sie ist dadurch gekennzeichnet, daß die Einspannwulst 7 auf der der Sprengwirkung abgewandten Seite hinter der der Sprengwirkung abgewandten Glashalteleiste 5 blockierend festgehalten ist. Bei der Ausführungsform nach den Fig. 1 bis 3 ist der Einspannwulst 7 in einer Nut 13 entweder der der Sprengwirkung abgewandten Glashalteleiste 5 oder aber des Fensterrahmens 1 blockierend festgehalten. Die Glasscheibeneinheit 2 kann wie üblich unterklotzt sein. Die die Sprengschutzmembran 6 überfassende Glashalteleiste 5 ist an ihren Berührungsstellen mit der Sprengschutzmembran 6 mit verrundeten Kanten 14 versehen, die auch ein elastisches Auflager aufweisen können. Die Nut 15 erhöht die Funktionssicherheit. Eine vergleichende Betrachtung der einzelnen Figuren macht deutlich, daß die Glasscheibeneinheit 2 Glasscheiben einer üblichen Dicke von z. B. 4 mm aufweist.

Geeignete Werkstoffe für die Sprengschutzmembran, insbesondere für die Kunststoffolie, sind (auch mehrschichtig) Polyvinylbutyral (PVB), Äthylenvinylacetat (EVA), linear vernetzte Polyurethane und weich Polyvinylchlorid (PVC). Insbesondere für die mehrschichtige Ausführungsform eignen sich PVB/Polyäthylenterephtalat (PETP) mit Kratzfestschicht aus fluorkohlenwasserstoffhaltigen Mischpolymerisaten und Polykieselsäure bzw. Kombinationen von Polykieselsäure und Copolymeren der fluorierten Monomere, die sekundäre Alkoholgruppen als weitere Komponenten enthalten können.

## Ansprüche

1. Gegen Sprengwirkung gesichertes Fenster für Bauwerke, - mit Fensterrahmen und in die Fensterrahmenöffnung eingepaßter Glasscheibeneinheit, wobei die Glasscheibeneinheit umlaufend einen überstehenden, verformbaren Befestigungsstreifen aufweist und dieser an dem Fensterrahmen befestigt ist, **dadurch gekennzeichnet,** daß die mittels Glashalteleisten (4, 5) am Fensterrahmen (1) befestigte Glasscheibeneinheit (2) eine die gesamte Fensterrahmenöffnung überspannende Sprengschutzmembran (6) aus Kunststoff aufweist, die mit einem über die Glasscheibeneinheit (2) vorstehenden Überstand den Befestigungsstreifen (3) bildet, daß der Befestigungsstreifen (3) in seinem Randbereich eine Einspannwulst (7) aufweist, unter Abwinklung zwischen einer Glashalteleiste (5) und dem Fensterrahmen (1) geführt und mit dem Einspannwulst (7) an der Glashalteleiste (5) und/oder an dem Fensterrahmen (1) formschlüssig blockiert ist.

2. Fenster nach Anspruch 1, dadurch gekennzeichnet, daß die Sprengschutzmembran (6) als verstreckte, durchsichtige Kunststoffolie ausgeführt ist.

3. Fenster nach Anspruch 1, dadurch gekennzeichnet, daß die Sprengschutzmembran (6) als ein maschendurchsichtiges Gewebe aus verstreckten Kunststoffäden, z. B. aus aromatischem Polyamid (Keflar) ausgeführt ist.

4. Fenster nach einem der Ansprüche 1 bis 3, dadurch gekennzeichnet, daß die Sprengschutzmembran (6) auf der der Sprengwirkung abgewandten Seite auf der Oberfläche der Glasscheibeneinheit (2) angeordnet ist.

5. Fenster nach einem der Ansprüche 1 bis 3 in der Ausführungsform, bei der die Glasscheibeneinheit eine Verbundglasscheibe aufweist, dadurch gekennzeichnet, daß die Sprengschutzmembran (6) zwischen zwei Glasscheiben (9, 10) der Verbundglasscheibe angeordnet ist.

6. Fenster nach einem der Ansprüche 1 bis 5, dadurch gekennzeichnet, daß der Befestigungsstreifen (3) einen Umschlag (11) aufweist, in dessen Faltkante eine Rundschnur (12) angeordnet ist, die die Einspannwulst (7) formt.

7. Fenster nach einem der Ansprüche 1 bis 6, dadurch gekennzeichnet, daß die Einspannwulst (7) auf der der Sprengwirkung abgewandten Seite hinter der der Sprengwirkung abgewandten Glashalteleiste (5) blockierend festgehalten ist.

8. Fenster nach einem der Ansprüche 1 bis 6, dadurch gekennzeichnet, daß die Einspannwulst (7) in einer Nut (13) der der Sprengwirkung abgewandten Glashalteleiste (5) und/oder des Fensterrahmens (1) blockierend festgehalten ist.

9. Fenster nach einem der Ansprüche 1 bis 8, dadurch gekennzeichnet, daß die Glasscheibeneinheit (2) eine oder mehrere Glasscheiben (9, 10) der maximalen Dicke von 6 mm, vorzugsweise der Dicke von 4 mm, aufweist.

10. Fenster nach einem der Ansprüche 1 bis 9, dadurch gekennzeichnet, daß die die Sprengschutzmembran (6) überfassende Glashalteleiste (5) an ihren Berührungsstellen mit der Sprengschutzmembran verrundete Kanten (14) und/oder elastische Auflagen aufweist.

Fig.1

Fig.2

Fig.3

Fig.4

Fig.5